# EUROPEAN PATENT APPLICATION

(11) **EP 4 300 729 A1**
(43) Date of publication of application: **03.01.2024**
(21) Application number: 23182427.7
(22) Date of filing: 29.06.2023
(51) Int. Cl.: H01S 3/23, H01S 3/067, H01S 3/106, H01S 3/00

(54) **METHOD FOR CONTROLLING PULSE DURATION AND ENERGY OF LASER RADIATION, DEVICE FOR IMPLEMENTING THE METHOD, AND LASER SYSTEM WITH THE INTEGRATED DEVICE**

(30) Priority: 30.06.2022 LT 2022526
(71) Applicant: UAB "Ekspla", 02300 Vilnius (LT)
(72) Inventor: BARTULEVICIUS, Tadas, 02300 Vilnius (LT)
(74) Representative: Draugeliene, Virgina Adolfina

(57) **Abstract**

This invention relates to methods and devices for controlling a chirp and duration of a laser radiation pulse. At the same time, pulse energy is also controlled. The device of the present invention includes a ring optical circuit featuring laser beam diffraction compensation, dispersion and amplification. The ultrashort input pulse makes a predetermined number of roundtrips. During each roundtrip of the ring optical circuit, an amplified phase-modulated (chirped) pulse is formed, part of which is outcoupled as an output pulse. A sequence of output pulses of different durations is formed. One output pulse of the required duration is extracted from said sequence of output pulses with the help of an optical switch. Since the energy of the pulse is restored or increased at each roundtrip of the ring optical circuit, the number of roundtrips is unlimited. Duration of the pulses is varied within a wide range of values from several hundred femtoseconds to several tens of nanoseconds, preserving a coherence length not larger than 300 µm. The device of the present invention can be used as a very compact, purely electronically controlled and with flexible parameters pulse stretcher in a chirped pulse amplification system.

## Description

### TECHNICAL FIELD OF THE INVENTION

The invention relates to methods and devices for controlling a chirp and duration of a laser radiation pulse. More specifically, the optical device described in the invention changes the chirp of a pulse of a primary laser source of ultrashort pulses and at the same time the duration of the pulse while maintaining a low coherence length. Said optical device is a ring optical circuit featuring laser beam diffraction compensation, dispersion, and amplification properties, in which an ultrashort laser pulse makes a predetermined number of roundtrips. The duration of the pulses depends on the number of roundtrips inside the ring optical circuit and is varied over a wide range of values from several hundreds of femtoseconds to several tens of nanoseconds. Because the amplifier is integrated into the ring optical circuit, the output pulse energy can be independently controlled.

### BACKGROUND OF THE INVENTION

Pulsed laser sources are used in many applications. Nanosecond pulse (ns) and ultrashort - picosecond (ps) or femtosecond (fs) - pulse lasers are used in material processing, metrology, scientific research, or medicine. A laser source with a controllable pulse duration from a few hundred fs to a few tens of ns would be a versatile tool in material processing since different modes of interaction with the material could be achieved. A laser source with widely variable radiation properties allows achieving the most optimal mode of operation in any other application too. Nanosecond pulses with a low coherence length can be used in various optical coherence tomography techniques, avoiding nonlinear interactions with the research object and improving the signal-to-noise ratio.

A multistage laser system, consisting of a seed source and a power amplifier, is often used, in which radiation undergoes shaping both at the initial stage and during amplification. The seed source is composed of a laser oscillator and additional elements which control temporal and/or spectral characteristics. Pulse duration of the laser oscillator itself depends, first of all, on the selected active medium: ns and ps pulses are obtained with narrowband active media. Fs pulses require broadband active media with a gain bandwidth exceeding 15 cm⁻¹ (for example, 1.5 nm at 1030 nm wavelength). Mode-locking of the oscillator resonator longitudinal modes and compensation of resonator dispersion are also required to achieve ultrashort pulse duration.

Both solid-state femtosecond laser oscillators (based on titanium-sapphire or crystals and glasses doped with ytterbium, thulium, holmium, or erbium ions, or glasses doped with other ions) and fiber femtosecond laser oscillators (in which the active medium is optical fibers doped with ytterbium, erbium, thulium, holmium, or other ions). Solid-state laser oscillators dominate among picosecond oscillators; the active medium is usually a crystal doped with neodymium ions. There are also fiber picosecond oscillators in which active media are the aforementioned rare-earth ion-doped optical fibers, and resonators have certain spectral filtering properties. Fiber laser modules are considerably more compact than solid-state ones and require simpler cooling solutions, and they also inherently provide good spatial quality of the laser beam. However, due to the small beam diameter, it can only operate up to a certain peak power before an occurrence of nonlinearities or damage. Recently, hybrid systems have become popular, in which the primary sources (seed sources) are fiber-optic, and the amplifiers to achieve higher pulse energy are solid-state.

Fiber oscillators usually have a certain set of resonator parameters with which they operate stably. With altered parameters, a stable mode of operation is not ensured. Thus, it is difficult to realize a choice of radiation characteristics in a wide range of values from the same oscillator. One of the characteristics which the user would like to select is the pulse duration. The typical tuning range of the pulse duration of femtosecond oscillators is: from tens to hundreds of fs or from hundreds of fs to tens of ps, or from hundreds of ps to tens of ns. Using an external temporal and spectral shaper: from 100 fs to 10 ps or from 500 fs to 1 ns. In most cases, achieving of a wide pulse duration tuning range with a single pulse stretcher (or compressor) is impossible. While solutions with spectral filtering for reduction of the radiation bandwidth are not applicable if a low coherence length is desired.

RU119946U1 (Kobtsev et al*.*) describes a fiber oscillator operating in a passive mode-locking regime, a pulse duration of which is tuned by varying a length of a resonator. The variation of the resonator length is done by making a discontinuous resonator instead of a continuous one: a section of a fiber is connected without splicing it to the main fiber of the resonator, but simply through a close contact. The inserted said section of a fiber can have different lengths. Due to the variable length of the resonator, a larger or smaller number of longitudinal modes are mode-locked, as a result, a pulse of a different duration is obtained. The main drawback of this solution is the principle itself - the mechanical replacement of the fiber section. Since mode-locking is carried out by a principle of nonlinear polarization evolution, the replacement of resonator components can lead to the non-repeatability of output parameters. Another disadvantage - alteration of the length of the resonator changes a pulse repetition rate of the oscillator and at the same time energy of the pulses. Finally, fiber sections of different lengths change an overall dispersion of the resonator, making said solution difficult to implement in a femtosecond oscillator. The achieved pulse duration tuning range in the solution of *Kobtsev et al.* is in the range from about 1 ps (for the inserted fiber section lengths less than 1 m) to about 1 ns (for the inserted fiber section lengths up to 1 km). The generated pulses have a duration close to a bandwidth-limited duration in the whole tuning range, so their coherence length exceeds the length occupied by the pulse in space. Said bandwidth-limited duration is a Fourier-transform-limited duration which is the shortest-possible pulse duration for a certain spectrum of the pulse.

WO2015084211A1 (Kobtsev et al.) describes a similar solution where a fiber oscillator of a variable resonator configuration, in which switching to another section or branch of the resonator is done electronically. Alternative branches of the resonator have elements that ensure different laser operation regimes: passive, active, hybrid (passive and active) mode-locking, or Q-switching. Depending on the regime of operation and the length of the connected fiber section making the alternative resonator branch, pulse durations from 100 fs to 10 ns are possible, but duration tuning throughout the entire said range is not possible, only a selection from a list of discrete values - from as many values as there are different resonator arms. Pulse durations are close to bandwidth-limited durations.

The applicants of this invention have filed to the European Patent Office a European patent application no. 21196873.0 (A. Michailovas et al.; priority date: 2021-09-15), describing a method and a laser apparatus for implementing the method for spectral conditioning of laser radiation in order to obtain a pulse for subsequent amplification with a duration from tens of picoseconds to several nanoseconds. Picosecond radiation (of 0.6 nm spectral width) of the oscillator is spectrally filtered, and the duration of the pulse is increased. Performing the spectral filtering many times, e.g. 50 times, the pulse duration can be increased from 100 to 1000 times. The laser apparatus for implementing this method is an active fiber loop, also referred to as a ring delay line or a ring optical circuit, which includes an input and output element, a spectral filter, an amplifier, and an optical switch. The amplifier performs as a loss compensator. The optical switch performs as a loss control device, i.e. as an additional pulse energy control device, as well as a termination device to stop the circulation of the pulse inside the fiber loop. The input and output element is a two-input two-output (2x2) fiber-optic beam splitter (fiber coupler). During each roundtrip, a part of the radiation is separated and ejected from the fiber loop. A sequence of pulses is obtained at the output of the device, from which a pulse with the desired duration is selected. The output pulse has no chirp (has no phase modulation) and is therefore bandwidth-limited. Depending on the bandwidth of the selected spectral filter, a shape of its spectral transmission function, and the number of roundtrips of the pulse inside the loop, the range of pulse durations within said sequence of pulses is from tens of picoseconds to 10 ns. In particular implementations of the apparatus with a single spectral filter and about 50 roundtrips of the pulse inside the fiber loop, duration tuning from 50 ps up to 400 ps or from 170 ps up to 1 ns can be obtained from a single apparatus. Dispersive pulse stretching while maintaining the width of the radiation spectrum is not designed in the solution of EP21196873.0. A wide pulse duration tuning range, covering femtosecond durations, is not possible either. The coherence length of a bandwidth-limited pulse with a 50 ps duration at 1030 nm wavelength is equal to 34 mm.

US11233372B2 (Muendel et al.) describes a mode-locked fiber oscillator featuring a ring resonator in which pulse chirping of broadband radiation is accomplished just before its ejection from the resonator. The terms "chirp", "chirping" and "chirped pulse" hereinafter mean that the pulse is characterized by phase modulation of the spectral components. The chirped pulse is also called the "phase-modulated pulse". The phase modulation is equivalent to an increase in pulse duration, the time-stretching of the pulse. Said ring resonator contains a chirped fiber Bragg grating (CFBG) and an optical circulator, which together perform as a device for chirping a part of the pulse (as a pulse stretcher) and for ejection of said part of the pulse from the resonator. The CFBG is embedded in the main ring of the resonator. The term "chirped Bragg grating" hereinafter means that the grating has a non-constant period of refractive index modulation, therefore, some spectral components are reflected close to the entrance of the grating and other spectral components are reflected at a greater depth, causing different propagation distances and a delay among them (spectral phase modulation). The part of the radiation which is reflected by the CFBG is chirped and this part is ejected through the circulator as an output stretched-in-time pulse. The part of the radiation which passes the CFBG continues to circulate inside the ring resonator and is unchirped (non-stretched-in-time pulse). Other components of the resonator are the same as those required for laser generation and passive mode-locking. As in all broadband laser oscillators, there is a dispersion control device that compensates for the dispersion of all resonator components to have the pulse of ultrashort duration circulating inside the resonator. After passing the active, i.e. amplifying, fiber, a part of the pulse is reflected and chirped again, and immediately ejected out of the resonator. In an alternative implementation of the solution, the active fiber is located between the circulator and the CFBG, so the chirped pulse reflected by the CFBG is amplified again before being ejected from the oscillator resonator. The *Muendel et al.* solution aims to avoid nonlinear phenomena on the path after the oscillator, which would occur at high pulse peak power, during pulse propagation from the oscillator to the main pulse stretcher, if the pulse stretcher is external. It allows higher pulse energies to be achieved without a risk of damaging the laser system and/or without pulse distortion but is not designed to stretch the pulse up to a duration desired by the user. The pulse passes through the dispersive element, the CFBG, once and is stretched exactly by the amount determined by the CFBG dispersion parameter.

US8582200B2 (Zaouter et al.), which is also published as EP2232654B1, describes a laser system consisting of an oscillator, a pulse stretcher, a power amplifier, and a pulse compressor. The main idea of the solution lies in amplifying chirped pulses and compressing chirped amplified pulses to the initial duration of the oscillator pulse. The power amplifier is fiber-optical (for example, photonic crystal fiber amplifier), while the pulse stretcher and the compressor are free-space components. The oscillator, which can be either a fiber-optical or a solid-state free-space laser, has a pulse duration in the range from 100 fs to 1 ps. The stretcher consisting of one or two diffraction gratings or a combination of prisms and gratings can stretch the pulse by a factor of many times (from hundreds of picoseconds to several nanoseconds), but with after selecting a number of grooves per unit length of the grating and the geometric dimensions of the whole stretcher, a wide pulse tuning range is not possible. Since the purpose of this solution is to compress the pulse after amplification to its initial duration, the parameters of the pulse compressor are such that they compensate for the second-order dispersion of the stretcher as well as the second-order dispersion caused by nonlinearities in the amplifier. The dispersion parameters of both the stretcher and the compressor, consisting of free-space components, can be changed by varying the distance among them. It is possible to not restore the initial pulse duration. However, a wide range of duration tuning, from nanoseconds to femtoseconds, is not possible.

US7729045B2 (Moro et al.), which is also published as EP1766735B1, describes a chirped pulse amplification system consisting of a pulse stretcher, a power amplifier, and a pulse compressor and is adapted to amplify pulses of both femtosecond and picosecond oscillator. The essence of the solution lies in chirping, amplifying, and compressing pulses of different initial duration to their original duration, without changing the components of the free-space pulse stretcher and the free-space pulse compressor, only their arrangement and orientation. According to a proposed first variant of this solution, several oscillators of different pulse durations (or widths of the spectrum) are used, which, together with said chirped pulse amplification system, form a laser source of a variable duration pulse. According to a proposed second variant of this solution, the variable pulse duration is achieved by using a spectral filter located in the Fourier plane of the pulse stretcher, which changes (narrows) the spectrum of the radiation, and in this way, after compression, the duration of the pulse is larger than the duration of the oscillator pulse. Using a real-time controllable acousto-optic dispersion filter, it is possible to achieve a continuously variable pulse duration covering the range from tens of femtoseconds to a few picoseconds. However, pulse stretching up to nanoseconds is not intended in this solution.

US9270075 (Leproux et al.) describes a laser system for generating pulsed continuum radiation, the pulse duration of which can be varied. The system consists of a pump source generating at a wavelength of 1060 nm and a continuum generator. Said pump source includes a semiconductor primary source (laser diode) and two fiber amplification stages, while the continuum generator is a photonic crystal fiber of high-nonlinearity. Control of the pulse duration is accomplished mainly in the primary source: the semiconductor source can be electronically modulated and can generate pulses with duration from 200 ps to 2 ns, and after amplification in fiber amplifiers, the pulse duration of the 1060 nm radiation is in the range from 171 ps to 2.12 ns. Continuum generation depends on the duration of the pump pulse. With a longer pump pulse, longer wavelengths show up. With a shorter pump pulse, the UV spectral components have higher intensity, while intensity steadily decreases (except for a few peaks) going towards the red and IR spectral range. Studies with femtosecond pulses were not performed in the solution of *Leproux et al.* because the pump source generated pulses longer than 200 ps.

US9008135B1 (Almeida et al.), which is also published as EP2572412B1, describes several embodiments of a fiber laser system with a tunable output pulse duration. In the first variant, the seed source contains several separate fiber oscillators with different radiation characteristics. Depending on the pulse duration required by the user, the pulse of only one of the oscillators is selected for further amplification with the help of a controller. Despite the fact that some elements, such as the pump source, can be common to these different oscillators, such a solution is not efficient and has very limited options for choosing the pulse duration. In another embodiment, the seed source is composed of a fiber source of ultrashort pulses and a preamplifier. In the preamplifier, self-phase modulation of radiation occurs, accompanied by spectrum broadening, and the strength of this effect depends on the gain factor. After the preamplifier, additionally, there is a dispersive element that chirps the pulse and determines the final duration of the pulse. Thus, by changing the amplification conditions, the user can vary the spectral width of radiation. The tuning range and sensitivity of the output pulse duration after all depend on a dispersion parameter of the dispersive element chosen, e.g. chirped fiber Bragg gratings. The same pulse duration can be obtained by various combinations of the amplifier and the dispersive element parameters. With a certain selected dispersive element through which the pulse passes only once, the duration of the pulse is varied by varying the gain parameters, but only from a few ps to a few tens of ps, or from tens of ps to hundreds of ps. Precise tuning of the duration is possible by changing the dispersion parameter of the dispersive element by mechanical stress or temperature. Simulation results for radiation of 0.25 nm spectral width (picosecond oscillator) showed that several duration tuning ranges are possible, but all fit within the range from a few ps to about 200 ps. In order to overlay the entire interval from a few ps to hundreds of ps, a solution with several dispersive elements, which would be selectively switched via a programmable optical switch, was proposed. To achieve an even larger duration tuning range from 1 ps to 1 ns, a large number of the dispersive elements would be required. Despite several proposed options, the solution of *Almeida et al.* cannot achieve a wide pulse duration tuning range from ultrashort to several nanosecond durations. And the switching among several independent primary oscillators does not inherently correspond to the very concept of a universal source. Changing the gain parameters to change the pulse duration means that the energy of the source pulses depends on the duration selection.

The closest prior art in terms of technical substance are solutions described in documents US7444049B1 (Kim et al.; priority date: 2006-01-23) and Zhang et al., "Pulse multi-pass stretcher using linear chirped fiber Bragg grating, " Proc. SPIE 8904, 89041M (2013).

*Zhang et al.* article describes an external fiber optical circuit for increasing the pulse duration of a picosecond fiber oscillator. Said external optical circuit is connected to the output fiber of the oscillator through a two-input and two-output acousto-optic modulator, which in this case acts as an optical switch, which injects the oscillator pulse into the ring optical circuit, closes the optical circuit and ejects the pulse from the ring optical circuit only after 1, 2, 3 or 4 roundtrips. Further, a chirped fiber Bragg grating CFBG is connected to the ring optical circuit through a circulator, and acts as an element that modulates a phase of spectral components. The ring optical circuit contains an isolator that determines a direction of radiation propagation. The ring optical circuit also includes a fiber amplifier to compensate for losses in the CFBG and other elements of the optical circuit. The selected CFBG dispersion parameter and the controlled number of roundtrips allowed to stretch the pulse of an Yb-fiber oscillator (1053 nm) from 16 ps to 155 ps, 270 ps, 378 ps or >500 ps duration. Further stretching of the pulse was not possible, because the pulse became distorted after four roundtrips. The reflectance function of the CFBG did not allow to maintain a wide radiation spectral width and, in addition, caused some modulation. The solution of *Zhang et al.* does not provide the duration tuning range from femtoseconds to nanoseconds.

Kim et al. patent US7444049B1 describes a chirped pulse amplification system consisting of an ultrashort-pulse oscillator, a pulse stretcher, a power amplifier, and a pulse compressor. The unique elements of this solution are the pulse stretcher and compressor, which are multi-pass, i.e. are composed of one or more chirped Bragg gratings, through which the pulse propagates once or several times. Said chirped Bragg grating may be a chirped fiber Bragg grating CFBG, a chirped volume Bragg grating CVBG, interferometers exhibiting dispersion, and so on. Said power amplifier can be inserted inside the pulse stretcher. According to one implementation of the *Kim et al.* solution, the multi-pass pulse stretcher is a fiber ring optical circuit, to which the CFBG through a circulator is connected, and the CFBG chirps the pulse. The more roundtrips in said ring optical circuit are done, the more passes through the CFBG occur and the more the pulse duration is increased. The number of roundtrips is controlled by an optical switch, which at the same time performs as an input device for the oscillator pulse and as an output device for the stretched pulse: it directs the oscillator pulse into said ring optical circuit, returns it to the ring after each roundtrip, until - after many roundtrips - directs the pulse to the output. The optical switch can be acousto-optic, electro-optic, or electro-mechanical, and injects the whole input pulse to the ring optical circuit without splitting it, and ejects the whole stretched pulse from the ring optical circuit without splitting it. To compensate for the loss of the ring optical circuit, there is a fiber amplifier inside. The description of the *Kim et al.* solution states that the number of roundtrips through the ring optical circuit can be changed from 1 to 100 and the increase in pulse duration up to 100 times can be achieved. This means that a 100 fs pulse could be stretched up to a 10 ps duration pulse. From one pulse of the ultrafast oscillator, one pulse of increased duration is obtained at the output. Since the main goal of this solution is to stretch the pulse up to a safe duration, an appropriate CFBG dispersion parameter can be selected, which allows for attaining the safe duration within 100 roundtrips.

In the described solutions of the closest prior art, a wide pulse duration tuning range and, at the same time, freedom to select pulse duration values with high precision (small increments of duration) from a single apparatus is impossible. Conditions to obtain pulse duration tuning range up to nanosecond durations are not specified. Also, the impact of the CFBG grating reflection bandwidth as well as the impact of amplification conditions on the spectrum and pulse duration of the circulating radiation has not been analyzed. Wide tuning of the pulse duration from 100 fs to 10 ns by the known temporal and spectral shaping techniques or laser oscillator control techniques is not revealed.

### TECHNICAL PROBLEM TO BE SOLVED

The aim of this invention is to provide an optical device featuring laser beam diffraction compensation, dispersion, and amplification properties for managing the pulse duration of broadband laser radiation in a wide tuning range. More specifically, it is aimed by this invention to obtain the pulse duration tuning range from 100 fs to 10 ns from a single apparatus. It is also the aim to make said optical device simple, stable, easy to control, and such that the pulse duration could be adjusted at a rate of at least 1 MHz. It is also aimed that the energy of the pulses could be independently controlled.

Another important goal of this invention is to maintain the width of the broadband radiation not narrower than 3.9 nm and a low coherence length not exceeding 300 µm, regardless of the selected pulse duration from the interval from 100 fs to 10 ns.

Yet another goal and possibility of application (and advantages over prior art solutions) of this invention is its application in chirped pulse amplifier (CPA) and optical parametric chirped pulse amplifier (OPCPA) systems as a very compact and freely user-changeable-parameter pulse stretcher.

### DISCLOSURE OF THE INVENTION

The essence of the proposed invention is that in a method for controlling pulse duration and energy of laser radiation comprising injection of a pulse of a broadband primary laser source into an optical circuit, where the injected pulse propagates as a working pulse and makes the following steps defining one complete cycle:
(A) directing at least a part of said working pulse into a ring optical circuit;
(B) undergoing energy losses of said part of the pulse, which propagates in the ring optical circuit;
(C) interacting said part of the pulse with a dispersive optical element to form a chirped pulse, with the condition that the pulse energy losses experienced in step (B) are less than 100%;
(D) amplifying said chirped pulse to form an amplified chirped pulse;
and further said steps of the cycle are repeated *N* times, where N is any integer, and in each subsequent cycle said amplified chirped pulse propagates through the optical circuit as a new working pulse, wherein
- the working pulse is split into two parts at the beginning of each cycle, wherein
- the part of the working pulse, which in step (A) is directed into the ring optical circuit, and another part of the working, which is not directed to the ring optical circuit, have a fixed energy ratio, and
- said another part of the working pulse is ejected from the optical circuit to form an output pulse,
- a sequence of output pulses is formed at an output port of said optical circuit, said sequence consisting of said output pulses ejected from the optical circuit,
- the sequence (6) consists of *N*+1 output pulses, duration of each subsequent pulse being different from the previous pulse of the sequence by an amount of *ΔT = Δλ***D*_{λ}*,* where *D*_{λ} is an overall dispersion parameter of said optical circuit, and *Δλ* is a spectral width of radiation; durations of the first pulse and the last pulse differ by an amount of *ΔT*_{N} = *N***Δλ***D*_{λ}*.*

Said fixed energy ratio of the parts and of the working pulse is selected from the range of values from 1%:99% to 99%:1%.

According to the present invention, other particular embodiment is proposed , the essence of which is that in device for controlling pulse duration and energy of laser radiation, having an optical circuit featuring beam diffraction compensation, dispersion, and amplification properties and comprising:
- an element for injecting a pulse of a broadband primary laser source into an optical circuit, where the injected pulse propagates as a working pulse;
- an element for directing at least a part of said working pulse to a ring optical circuit;
- a loss control element designed to control energy losses of said part of the pulse, which propagates in the ring optical circuit;
- a dispersive optical element designed to change a phase of spectral components of said part of the pulse, which propagates in the ring optical circuit, to form a chirped pulse;
- an optical amplifier for amplifying said chirped pulse to form an amplified chirped pulse;

wherein said direction of the part of the pulse to the ring optical circuit and its propagation inside the ring optical circuit occurs *N* times, where N is any integer, and in each subsequent roundtrip of the ring optical circuit, said amplified chirped pulse propagates as a new working pulse,
wherein
   - said element is a beam splitter, having two inputs and two outputs and splitting a pulse received through any of the inputs into two parts in a fixed ratio;
   - said element is configured and integrated in said optical circuit so that the part of the pulse from the first output of the element is ejected from said optical circuit, forming an output pulse after each roundtrip of the ring optical circuit; while the part of the pulse from the second output of the element, after a complete roundtrip of the ring optical circuit and being formed as the amplified chirped pulse, gets into one of the inputs of the element again as a working pulse;
   - said loss control element is an acousto-optic modulator having one input and one or two outputs, the input and one of the outputs of which are connected to said ring optical circuit; wherein
from said output pulses formed after each roundtrip of the ring optical circuit, a sequence of output pulses consisting of *N*+1 output pulses is formed; duration of each subsequent pulse being different from the previous pulse of the sequence by an amount of *ΔT = Δλ***D*_{λ}*,* where *D*_{λ} is an overall dispersion parameter of said optical circuit, and *Δλ* is a spectral width of radiation; durations of the first pulse and the last pulse differ by an amount of *ΔT*_{N} = *N***Δλ***D*_{λ}*.*

Durations of the pulses at a half-intensity level is in the range from 100 fs to 10 ns.

The duration of each subsequent pulse of the output pulse sequence is larger than the duration of the preceding pulse.

A coherence length of said pulses of the sequence does not exceed 300 µm.

A repetition rate of the output pulse sequence is in the range from 1 kHz to 1 MHz.

Energy of the amplified chirped pulse at the end of each roundtrip of the ring optical circuit is higher than the energy of said working pulse at the beginning of that roundtrip of the ring optical circuit.

A roundtrip time *T2* of said ring optical circuit is selected to be at least five times longer than the duration of the longest pulse of the output pulse sequence at the half-intensity level and to exceed 6 ns; any single pulse is picked from the output pulse sequence by an optical switch.

All components of said optical circuit are fiber-optic or with integrated fiber input and output connections forming a continuous fiber optical circuit:
- the loss control element is an acousto-optic modulator for fiber circuits,
- the optical amplifier is a segment of a fiber doped with active ions,
- the beam splitter is a 2x2 fiber beam splitter, the second output of which is connected to the second input by said fiber components of the device to form a ring optical circuit,
- the dispersive optical element is at least one chirped fiber Bragg grating, which is connected to the optical circuit through a circulator, and changes the phase of the spectral components of the reflected radiation, and its parameters ensure a high reflection coefficient for the wavelengths of the radiation circulating in the ring optical circuit.

All components of said optical circuit are fiber-optic or with integrated fiber inputs and outputs forming a continuous fiber optical circuit:
- the loss control element is an acousto-optic modulator for fiber circuits,
- the optical amplifier is a segment of fiber doped with active ions,
   - the beam splitter a 2x2 fiber beam splitter,
   - the optical circuit is linear and is formed by a trajectory of a circulating pulse from one reflective Bragg grating connected to the second output of the element to another reflective Bragg grating connected to the second input of the element; at least one of said reflective Bragg gratings is a chirped fiber Bragg grating which operates as a dispersive optical element which changes the phase of the spectral components of the reflected radiation;
   - parameters of both Bragg gratings ensure a high reflection coefficient for the wavelengths of radiation circulating in the optical circuit.

An absolute value of the dispersion parameter *D*_{λ} of said optical circuit is in the range between 0.03 ps/nm and 300 ps/nm.

According to yet another embodiment of the present invention is proposed a laser system for amplifying chirped pulses comprising a primary laser source, a pulse stretcher, an amplifier, and a pulse compressor and generating a compressed output pulse with a duration equal to the ultrashort duration of the pulse of the primary laser source or has an intermediate value between the duration of said pulse and a duration of a pulse after the pulse compressor, wherein
to accomplish the function of the pulse stretcher and the amplifier, or the pulse stretcher only, the device for controlling pulse duration and energy of laser radiation according to any of claims 3-12 is used.

The amplifier is a quantum amplifier selected from a list of solid-state or fiber amplifiers with an amplification factor of at least 1000; one chirped pulse is directed to the quantum amplifier; said chirped pulse is picked by the optical switch from the pulse sequence at the output of the optical circuit of said device according to any of claims.

Said output pulse of the pulse compressor is used to pump another system, and its duration depends on the mode of operation of said laser system: in one mode of operation, it is equal to the duration of the pulse of the primary laser source, and in another mode of operation it is at least twice larger than the duration of said pulse.

### ADVANTAGES OF THE INVENTION

The proposed method and optical device are universal, stable, and easy to operate. The wide pulse duration selection range allows the method and device to be used in a wide variety of applications, including optical coherence tomography, CPA and OPCPA systems, as a stand-alone regenerative amplification device, etc.

Implementation of the present invention in a CPA system has the following advantages: the optical device in which many roundtrips of laser radiation through the dispersive element are accomplished, can operate as a very compact and flexible pulse stretcher. Firstly, high pulse dispersion and duration stretching are achieved within a single apparatus. Secondly, the pulse duration and the energy can be selected within a wide range and changed whenever necessary. The need for fine adjustment of the pulse duration may arise from an incorrectly estimated impact of the gain on radiation spectrum. Installing the CPA amplifier in an OPCPA system - which is a complex, highly parameter-dependent, and multi-element system, operating with extremely high power radiation - the possibility of pulse duration fine tuning becomes even more important. The CPA amplifier with an integrated device of the present invention is preferable. Standard CPA systems require compatibility of geometrical parameters of the pulse stretcher and compressor, and there are few pulse duration adjustment options. The CPA system with the integrated device of the present invention has a highly flexible pulse stretcher: without changing geometrical dimensions of the optical elements or changing the elements themselves, only by adding or reducing the number of roundtrips, the duration of the stretched pulse can be adjusted. Moreover, the same CPA can be used for OPCPA system adjustment as well as for OPCPA system ordinary operation. Without changing geometrical dimensions of the optical elements or changing the elements themselves, only by adding or reducing the number of roundtrips, or only by directing the circulating pulse to an alternative side arm of the ring optical circuit with a dispersive optical element of the opposite sign, it is possible to significantly change the duration of the stretched pulse. The pulse compressor of the CPA system will compress the pulses to a first pump pulse duration - suitable for OPCPA system adjustment. Alternatively, the pulse compressor of the CPA system will compress the pulses to a second pump pulse duration - suitable for the OPCPA system operation.

The implementation of the device of the present invention as a fiber regenerative amplifier has the unique property of increasing pulse energy without exceeding a peak power limit value at which nonlinearities reveal and/or optical elements damage occurs. By amplifying the pulse as many times as its duration is increased, a fixed peak power is maintained.

### BRIEF DESCRIPTION OF THE DRAWINGS

Fig.1 - an illustration of the method for controlling pulse duration and energy of laser radiation of the present invention.
Fig.2 - the first embodiment of the device of this invention.
Fig.3 - the second embodiment of the device of this invention.
Fig.4 - the third embodiment of the device of this invention.
Fig.5, Fig.6 - modeling results of pulse duration variation in the device of this invention.
Fig.7, Fig.8 - embodiments of the device of this invention destined to achieve the wide pulse duration tuning range without losing the precision of pulse duration selection.
Fig.9 - the chirped pulse amplifier laser system of this invention.

### THE BEST IMPLEMENTATION OPTIONS OF THIS INVENTION

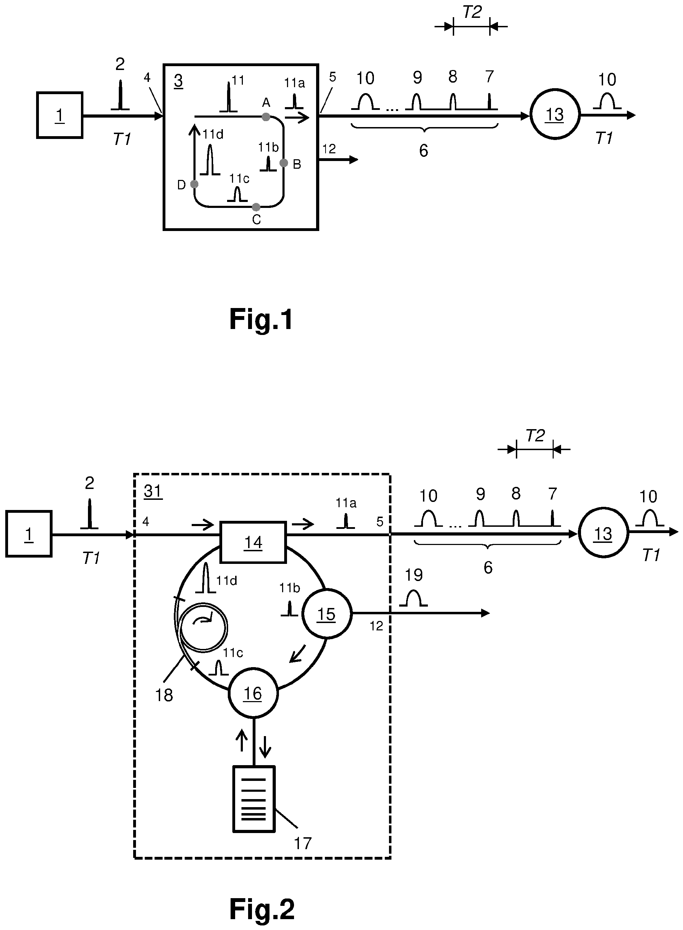

The method for controlling pulse duration and energy of laser radiation (Fig.1) comprises injection of a pulse 2 of a broadband primary laser source 1 into an optical circuit 3 and partial ejection from said optical circuit 3 during each roundtrip, as well as picking of a pulse of the required duration. Said optical circuit 3 is a stand-alone external device that features properties of beam diffraction compensation, dispersion, and amplification. Hereinafter the optical circuit 3 will also be referred to as an external optical circuit, external dispersive optical circuit, or active dispersive optical circuit. The pulse injected through an input port 4 to the optical circuit 3 makes *N* roundtrips, and has a different duration after each roundtrip inside the optical circuit 3. The optical circuit 3 is composed of a ring optical circuit and an input and output device. After each roundtrip of the ring optical circuit, a part of the laser radiation is ejected from the optical circuit 3. At an output port 5 of the optical circuit 3, an output pulse sequence 6 consisting of *N*+1 pulses 7, 8, 9, ..., 10 is formed. Each pulse 7-10 of the output pulse sequence 6 has a different duration since the optical circuit 3 has a predetermined amount of dispersion destined to manage the pulse duration. It is aimed that the width of the radiation spectrum remains unchanged or its change due to the spectrum filtering properties of the optical circuit 3 and/or pulse self-phase modulation is negligible. Several scenarios are possible. If the pulse 2 of the primary laser source 1 has no initial chirp, and the spectral width of radiation does not change during propagation in the optical circuit 3, each output pulse 7-10 of the output pulse sequence 6 is longer than the previous one. If the pulse 2 of the primary laser source 1 is already chirped, and the spectral width of radiation does not change during propagation in the optical circuit 3, durations of the output pulses 7-10 vary depending on a sign of the dispersion parameter of the optical circuit 3. If the sign of the dispersion parameter of the optical circuit 3 is opposite to a sign of the chirp of the pulse 2, each output pulse 7-10 of the output pulse sequence 6 is shortened until full compensation of the initial chirp occurs, after which the pulse begins to lengthen again. Regardless of the duration of the output pulses formed by the optical circuit 3, the wide spectral width of radiation is maintained, therefore, the low coherence length characteristic to ultrashort pulses is maintained. There are several definitions of the coherence length. In the description of this invention, we define the coherence length by the formula *λ*²/Δ*λ*, where *λ* is the central wavelength and Δ*λ* is the spectral width (bandwidth) at a half level of the maximum spectral intensity. For example, the coherence length of radiation with 5.2 nm spectral width at 1030 nm (corresponds to the 300 fs bandwidth-limited Gaussian pulse duration) does not exceed 200 µm. And the coherence length of radiation with 3.9 nm spectral width at 1030 nm (corresponds to 400 fs bandwidth-limited Gaussian pulse duration) does not exceed 300 µm.

Inside the ring optical circuit, there is a loss compensation optical element - an amplifier. After a complete roundtrip of the optical circuit 3, the energy of the pulse is restored, and, therefore, a number of roundtrips *N* can be unlimited. Equal energies of output pulses 7-10 can be obtained. Pulses of equal amplitudes are shown in Fig.1 only to illustrate changes in pulse duration, but do not reflect the ratio of pulse energies, which may be various.

A principle of the method and the device of this invention can be analyzed in greater detail. Suppose the pulse 2 of the initial laser source 1 is not chirped, i.e. is bandwidth-limited. The pulse injected into the optical circuit 3 (denoted as a pulse 11 in Fig.1, which, at the beginning of the first roundtrip, coincides with the initial pulse 2) undergoes the following steps of actions:
(A) the pulse 11 is split into two parts 11a, 11b; one part 11a is ejected from the optical circuit 3 through the output port 5, and another part 11b is directed into the ring optical circuit;
(B) said another part 11b of the pulse propagating in the ring optical circuit experiences losses of the amount from 0% to 100%;
(C) if the losses are not equal to 100%, a part of the pulse propagating further in the ring optical circuit undergoes phase modulation of spectral components and becomes a chirped, i.e. phase-modulated, pulse 11c;
(D) said pulse 11c is amplified in an optical amplifier and becomes the amplified chirped, i.e. amplified phase-modulated, pulse 11d. The pulse 11d at the end of the roundtrip is longer than the pulses 11 and 11b at the beginning of the same roundtrip. The final duration of the pulse 11d is determined by an overall dispersion parameter *D*_{λ} of the optical circuit 3.

The pulse undergoes the described sequence of steps of actions N times until the moment when in step (B) the losses of the optical circuit are increased to 100%. In step (A), the portion 11b of the pulse that is directed to the ring optical circuit is fixed and is selected from the range of values from 1% to 99%, preferably equals to 50%. Control of losses of the ring optical circuit in step (B) is required as a protection against a self-oscillation during a time interval before the next initial pulse 2 is injected into the optical circuit 3; and for the purpose of termination of pulse circulation inside the ring optical circuit when the required pulse duration is attained. The optical circuit 3 may have a second output port 12 to which one or more pulses originating from losses in said step (B) are directed. An additional requirement for the device according to the method of Fig.1 is beam diffraction compensation. In a free-space realization, image-relay elements are necessary. In fiber optical realization, particularly with single-mode fibers, the problem of beam diffraction is self-resolved.

If the pulse 2 of the initial laser source 1 is chirped, and the sign of dispersion of the external optical circuit 3 coincides with the sign of the pulse chirp, then the pulse will also lengthen during each roundtrip. If the pulse 2 of the initial laser source 1 is strongly chirped, and the sign of dispersion of the external optical circuit 3 is opposite to the sign of the pulse chirp, then the pulse will shorten during each roundtrip and can be shortened to a bandwidth-limited duration. If such pulse continues to circulate in the ring optical circuit, it begins to lengthen again.

A pulse 10 of the required duration from said sequence 6 is picked by an optical switch 13. Pulses 10 of the same duration repeat with a period *T1,* which coincides with a period of the pulses 2 of the primary laser source. A roundtrip time T2 of the ring optical circuit is selected to be at least 5 times longer than a duration of the longest pulse of the output pulse sequence 6 at half-intensity level and to exceed 6 ns in order to be able to accomplish said pulse picking by the optical switch 13. Pulses within the sequence 6 at the first output 5 repeat with said period T2.

The pulse duration change - increment or decrement - during one roundtrip of the ring optical circuit, as well as the number of roundtrips required to attain the desired pulse duration depends on the value of the overall dispersion parameter *D*_{λ} of the optical circuit 3. The duration of each subsequent pulse in the output pulse sequence 6 differs from the duration of the preceding pulse by an amount *ΔT = Δλ***D*_{λ}*.* Accordingly, the durations of the first pulse 7 and the last pulse 10 differ by an amount *ΔT*_{N} = *N***Δλ***D*_{λ}*.*

If a significant pulse stretching or a wide duration tuning range is aimed only, while large differences of durations of adjacent pulses in the sequence 6 can be afforded (low pulse duration precision), said dispersion parameter can be chosen as high as possible. If a fine tuning of the pulse duration is intended, the dispersion parameter must be small. In this case, more roundtrips would be necessary to change the pulse duration by a large amount.

To summarize, the optical circuit 3, which controls the pulse duration (and energy) of the laser radiation, features beam diffraction compensation, amplification and dispersion properties. Dispersion creates or changes the chirp of the pulse, which results in the desired pulse duration, at the same time maintaining the low coherence length. The number of the roundtrips *N* is controlled by the user, and during each roundtrip pulse energy is restored or increased. *N* is unlimited, thus any pulse duration with more than 1000 times pulse lengthening can be achieved. With the method of the present invention, we achieve the tunable pulse duration in the range from 100 fs to 10 ns while maintaining the coherence length not exceeding 300 µm.

Fig.2 depicts the first embodiment of a device of the present invention according to the method of FIG.1. The optical circuit 3 for controlling pulse duration and energy of laser radiation is an optical circuit 31 composed entirely by fiber-optic components or components with the integrated fiber-optic input and output connectors. The optical circuit 31 consists of a fiber beam splitter 14 having two input and two output ports (2x2), and fiber components making a ring optical circuit that connects the second output port of the beam splitter 14 to the second input port of the beam splitter 14. The beam splitter 14 performs as a device for injecting the pulse 2 into the optical circuit 31 and as a device for splitting the input pulse 11 or the pulse 11d that has completed a roundtrip inside the ring optical circuit. The ring optical circuit consists of an optical switch 15 (preferably an acousto-optic modulator), a fiber circulator 16, a dispersion element 17 (preferably a chirped fiber Bragg grating CFBG), and a fiber amplifier 18. All components are connected by single-mode polarization-maintaining optical fibers. After each roundtrip of the ring optical circuit, a part of the pulse is ejected from the optical circuit 31 through the output port 5, and another part is returned to the ring optical circuit. CFBG 17 is an element that makes the main task - adds spectral phase modulation to the pulse and thus changes its duration (the main contribution to the value of the dispersion parameter *D*_{λ} of the ring optical circuit comes from the dispersion parameter of the CFBG 17). The spectral components forming the pulse have different phases and, as a result, the pulse has a chirp of the carrier frequency. A chirped pulse is longer than a pulse of the same spectral width without chirp. In the spectral rage at 1010 nm-1080 nm, there is a normal dispersion region in optical fibers, which also leads to the lengthening of the pulse because of different speeds of the spectral components in glass (material dispersion). In normal dispersion region, long-wave spectral components outrun short-wave spectral components. The CFBG 17 with the same sign of dispersion parameter as that of the material dispersion of the fibers increases the overall dispersion of the system (in another variant of this invention, a dispersive element 17 with the opposite sign of dispersion parameter can be used, the dispersion of which would overcompensate the material dispersion of the fiber and would create a chirped pulse with an opposite sign of phase modulation). The pulse 11c, after the interaction with the CFBG 17, is longer than the pulse 11b. The fiber amplifier 18, which is an active ion doped optical fiber, can compensate the energy loss only or can amplify the stretched pulse. Coupling of pump radiation into active fiber can be realized in several ways known in fiber optics (not shown in Fig.2 as it is not an object of this invention).

The primary laser source 1 can be an ultrashort-pulse fiber oscillator generating pulses of 100 fs-400 fs duration. In a preferred embodiment of the present invention, the CFBG ensures high reflectivity in a 20 nm-bandwidth spectral range around the central wavelength of the oscillator radiation. The most ideal situation is when the CFBG reflection profile is flat-top. If the reflectance function of the CFBG is narrower than the bandwidth of the radiation spectrum, the CFBG at the same time acts as a spectral filter. In this case, the change in pulse duration will be affected not only by dispersion, but also by changes in spectral width.

When the required pulse duration is attained, the pulse propagation in the ring optical circuit is terminated by the optical switch 15, which ejects the pulse to the second output port 12 or to the beam dump. The pulse 19 ejected through the second output port 12 emerges with a slight delay from the last pulse 10 of the sequence 6, and can also be utilized. If the optical switch 15 directs some portion of the radiation to the port 12 during many cycles, instead of the single pulse 19 there is a sequence of pulses at the second output 12; pulses within this sequence at the second output 12 also repeat with the period T2. Sequences at the outputs 5 and 12 are mutually synchronized, which can be useful. Also, optical circuit 3 may have more than two outputs. Additional outputs can be organized through existing or additional elements: CFBG 17, additional beam splitters and other. As long as nonlinear phenomena and/or spectrum filtering do not occur, the arrangement order of said optical circuit 3 components is not important for the purposes of this invention, only the value of the overall dispersion parameter *D*_{λ} of the optical circuit 3 is important.

As already mentioned, the total length of the ring optical circuit ensures the T2 interval between adjacent pulses in the sequence of output pulses 7-10, which is at least 6 ns and at least 5 times longer than the longest pulse of the sequence 6 at half-intensity level. The precision and the speed at which pulse duration is changed to a desired value depends on the value of the overall dispersion parameter *D*_{λ}. Since the main contribution to overall dispersion parameter *D*_{λ} is the value of the dispersion parameter of the CFBG 17, in order to achieve a significant pulse stretching or a wide range of pulse duration tuning, the dispersion parameter of the CFBG 17 should be as large as possible. In order to achieve fine tuning of pulse duration, the dispersion parameter of the CFBG 17 should be small. With the device of the present invention for controlling pulse duration and energy of laser radiation, we achieve tunable pulse durations in the range from 100 fs to 10 ns while maintaining a coherence length not exceeding 300 µm.

Amplification in the ring optical circuit can have the following options:
- pulses are amplified so that energies of the output pulses in the sequence 6 are equal;
- pulses are amplified so that the desired envelope of the sequence 6 is obtained, and the self-phase modulation does not occur for any pulse;
- pulses are amplified so that the desired envelope of the sequence 6 is obtained, and the self-phase modulation occurs (for one or several of the most intense pulses). The self-phase modulation leads to the appearance of additional spectral components, thus due to the broader spectrum the chirped pulse 11d is yet longer.

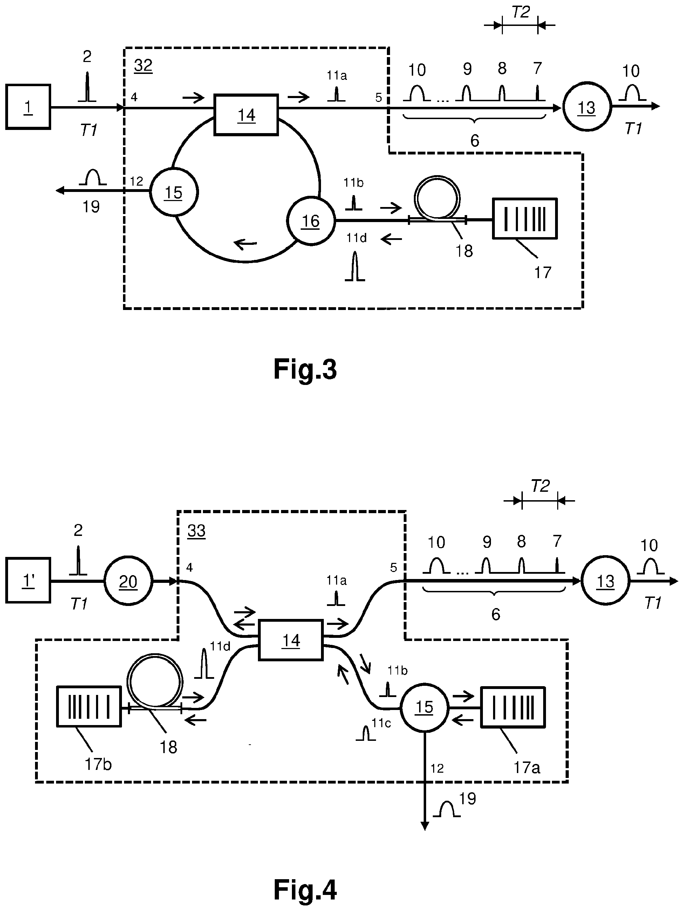

Fig.3 - another embodiment of the device of this invention. The pulse duration of the broadband laser source 1 is managed by an optical circuit 32, in which the amplifier 18 is placed in a side arm of the ring optical circuit. In this case, the pulse experiences amplification twice during one roundtrip: before the CFBG 17 and after it. The evolution of the pulse amplitude in the optical circuit 32 will be slightly different from the evolution of the pulse amplitude in the optical circuit 31. Changes in the duration of the pulse during one roundtrip of the ring optical circuit will depend on the dispersion of the CFBG 17, and on whether the amplifier 18 exhibits pulse self-phase modulation and/or amplification saturation. In the absence of self-phase modulation and gain saturation, changes in pulse duration in the optical circuit 32 will coincide with changes in pulse duration in the optical circuit 31.

Fig.4 - yet another embodiment of the device of this invention. The device for controlling pulse duration and energy is an optical circuit 33, which in this case has not the shape of a real circular ring, but consists of two branches: the first branch ends with a fiber Bragg grating 17a, reflecting the pulse back, which returns along the same path to the beam splitter 14. Next, the beam splitter 14, the pulse is split again, and a part of the pulse enters the second branch, which ends with another fiber Bragg grating 17b, which again reflects the pulse back. This completes one full roundtrip of the optical circuit 33 in which pulse splitting, amplification, and dispersion control take place. If both gratings 17a and 17b are CFBGs, they act as two independent pulse dispersion control devices. During one roundtrip through the optical circuit 33, the pulse undergoes phase modulation twice, and also twice passes the amplifier 18, which can be placed in any of the aforementioned branches of the optical circuit. As in the ring configurations (Fig.2, Fig. 3), the optical circuit 33 includes an optical switch 15, which terminates propagation of the pulse (ejects the pulse 19 through the second output 12) and prevents from noise amplification. In order to protect the primary laser source 1 from the return pulse through the input port 4, an isolator 20 or other means are necessary for this embodiment of the invention.

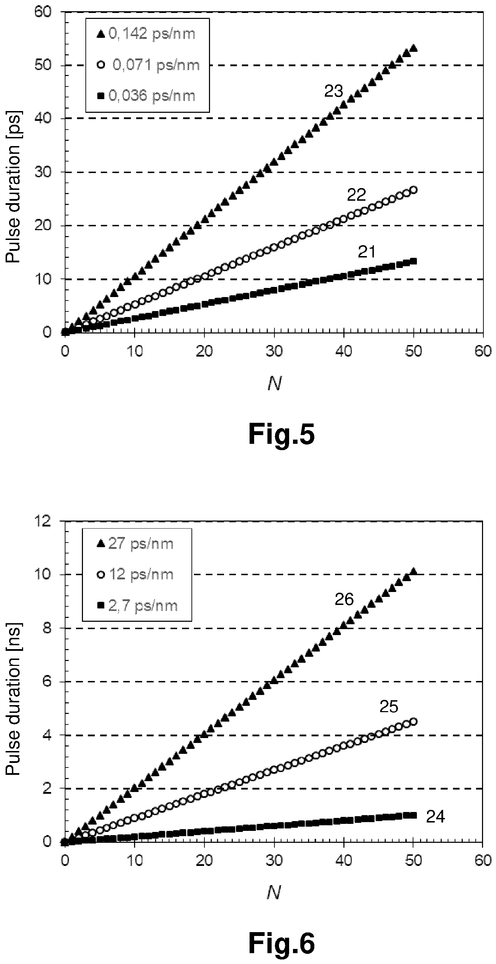

In Fig.5 and Fig.6, simulation results are given of how the duration of the output pulse 10 varies depending on the number of roundtrips in the active dispersive optical circuit embodied according to Fig.2. The following parameters are selected for the modeling:
- a shape of the spectrum of the initial pulse 2 is Gaussian, and the spectral width at the height of half-maximum-intensity is equal to 7.5 nm;
- the initial pulse is bandwidth-limited (not chirped) with a duration of 202 fs;
- a reflection coefficient of the CFBG is the same for all spectral components;
- the amplifier does not change the width and the shape of radiation spectrum;
- only the second-order dispersion of the optical circuit is taken into account:
   21 - when the modulus (absolute value) of said overall dispersion parameter *D*_{λ} is equal to 0.036 ps/nm;
   22 - when 0.071 ps/nm;
   23 - when 0.142 ps/nm;
   24 - when 2.7 ps/nm;
   25 - when 12 ps/nm;
   26 - when 27 ps/nm.

With the small dispersion parameter (Fig.5), the pulse duration is increased to 13.32 ps, 26.66 ps, and 53.33 ps, respectively, after 50 roundtrips. With the large dispersion parameter (Fig.6), the pulse duration is increased to 1.01 ns, 4.50 ns, and 10.13 ns, respectively, after 50 roundtrips. The lower the overall dispersion of the active dispersive optical circuit, the smaller the pulse duration increment. The pulse duration increments are 0.26 ps, 0.53 ps, and 1.06 ps, respectively, in dependences 21-23 of Fig.5. A large dispersion parameter leads to a large pulse duration increment allowing to attain a region of large duration values faster, but with less precision. The pulse duration increments are 20 ps, 90 ps, and 203 ps, respectively, in dependencies 24-26 of Fig.6. A wide pulse duration tuning range can be achieved by making the number of roundtrips large. The amplitude or energy of the pulses is controlled by compensating losses.

In real systems, the problem of spectrum narrowing exists in the amplifier and the dispersive element. A real gain profile of the amplifier and a real reflection profile of the dispersive element (dependence of the reflection coefficient on the wavelength) modify the spectrum of the circulating radiation, usually, narrow it. Therefore, the change of the pulse duration with each roundtrip of the active dispersive optical circuit may differ from the simplified modeling result. For example, pulse duration may increase more slowly with respect to N than it is shown in the graphs of Fig.5 and Fig.6. Higher-order terms of dispersion can also affect the dependence of the pulse duration on the number of roundtrips of the dispersive optical circuit of the real system.

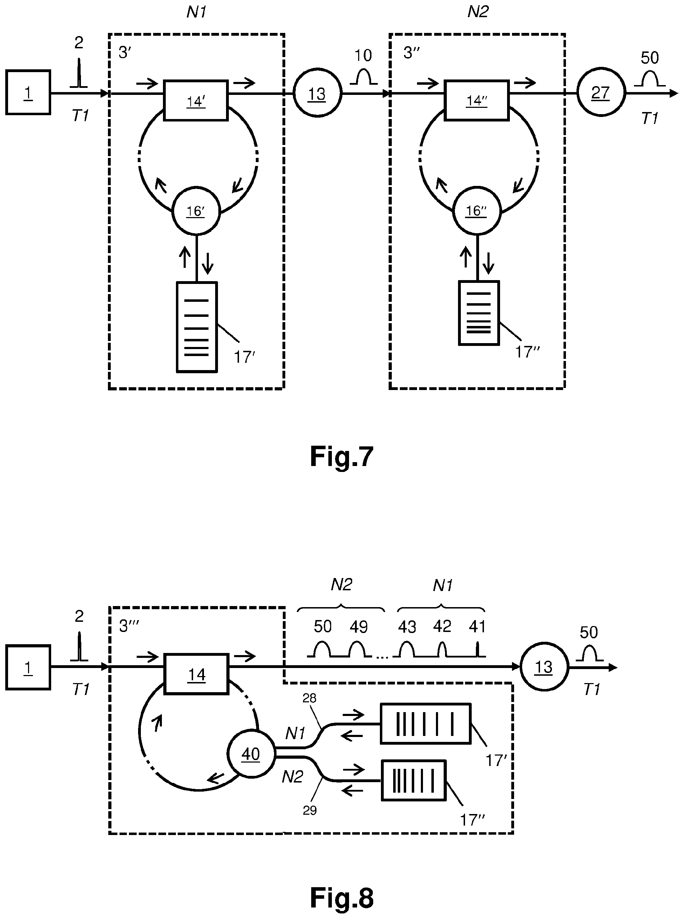

Fig.7 and Fig.8 are embodiments of the device of the present invention to achieve a wide pulse duration tuning range without losing the possibility to control the pulse duration with high precision. In the variant of Fig.7, a sequence of two external dispersive optical circuits 3', 3", implemented according to Fig.2 or Fig.3, are used. An overall dispersion parameter of the first external dispersive optical circuit 3' with a dispersive element 17' is large, therefore, duration of the pulse increases quickly (as, for example, in the modeling of Fig.6). An overall dispersion parameter of the second external dispersive optical circuit 3" with the dispersive element 17" is small, therefore, pulse duration increases more slowly (as, for example, in the modeling of Fig.5). By combining the two said optical circuits 3', 3", and choosing a proper number of pulse roundtrips *N1, N2* in each of them, it is possible: 1) to stretch the pulse from tens to thousands of times within a low number of roundtrips in the first optical circuit 3', 2) then, after selecting the single pulse 10 with the optical switch 13, to stretch it further by small duration increments in the second optical circuit 3". The optical switch 27 separates an output pulse 50 from the pulse sequence formed by the optical circuit 3".

In the variant of Fig.8, a single external dispersive optical circuit 3‴ is used, in the ring of which there is a commutator 40, which directs the circulating pulse either to the first branch 28, ending with a dispersive element 17', or to the second branch 29, ending with a dispersive element 17". The parameters of the dispersive elements 17', 17" are different, so the evolution of pulse duration depends on through which branch the pulse propagates. If the pulse propagates through the first branch 28 during the first *N1* roundtrips, durations of pulses 41, 42, 43 differ by hundreds of times. If the commutator 40 later directs the pulse to the second branch 29, the increase in pulse duration slows down and durations of *N2* pulses 49, 50 differ by small amount (on the order of one pulse duration or less).

Since said optical circuits 3, 31-33, 3', 3", 3‴ include the amplifier 18, an extremely large number of roundtrips can be realized. Limitations to how much the pulse duration can be increased can arise from the already mentioned narrowing of the spectrum and on the values of the periods *T1* and *T2. T1* defines the possible duration of the sequence 6 itself (Fig.1-Fig.4), and *T2* defines a time interval between adjacent pulses within the sequence 6, or in other words, pulses of which duration can still be distinguished. If there is a need to stretch the pulse to a 10 ns duration, the roundtrip time *T2* of the ring optical circuit must be at least 50 ns or longer. If there is a need to stretch the pulse to a >10 ns duration, the roundtrip time T2 of the ring optical circuit must be increased.

According to yet another embodiment of the present invention, the dispersive optical element 17 is a chirped volume Bragg grating CVBG. There is no limit to the maximum value of the dispersion parameter *D*_{λ} of the active dispersive optical circuit of the present invention. Only technological limits of chirped Bragg gratings determine how much dispersion can be achieved with a single dispersive element. It is known that values of the dispersion parameter of CFBGs and CVBGs can be from several tens to several hundred ps/nm. The overall dispersion parameter *D*_{λ} of the optical circuit takes into account the dispersion of all components but is mainly determined by the value of the dispersion parameter of the dispersive optical element 17 or elements 17a, 17b. In order to have large dispersion parameter *D*_{λ} in one roundtrip, which is impossible to achieve with CFBGs or CVBGs available on the market, it is possible to integrate several dispersion elements - as in Fig.4. or in other known ways, for example, using multiple circulators or forming a side arm of the ring optical circuit in which the pulse consecutively passes several dispersive elements. A formula for calculation of the pulse duration after *N* roundtrips is: *T*_{N} = *T*₀ + *N**Δ*λ***D*_{λ}, where *T*₀ is the initial pulse duration. The formula is valid if the initial pulse is bandwidth-limited, as well if the initial pulse is chirped and its chirp sign coincides with the sign of the optical circuit 3 dispersion. If the initial pulse is chirped but its chirp sign is opposite to the sign of the optical circuit 3 dispersion, the aforementioned formula will be valid from the time when the dispersion will be compensated; one should use (*N-K*) instead of N*,* where *K* is a number of roundtrips until dispersion compensation occurs and *T*₀ is the bandwidth-limited pulse duration. If the initial pulse is only weakly chirped, and the dispersion parameter of the optical circuit 3 is large so that the dispersion overcompensation occurs during the first roundtrip, the aforementioned formula is also suitable for the approximate estimation of the duration.

*Example no.1:* Radiation of 15.6 nm spectral width propagates through the active dispersive optical circuit 3 (or 31-33) characterized by the overall dispersion parameter *D*_{λ}, an absolute value (modulus) which is equal to 30 ps/nm. A bandwidth-limited 100 fs Gaussian pulse at 1030 nm is lengthened by 468 ps during a single roundtrip and becomes 4.68 ns in duration after 10 roundtrips. *Example no.2:* The spectral width of radiation is equal to 7.8 nm. If CFBG with a larger dispersion parameter is selected, and the absolute value of the overall dispersion parameter *D*_{λ} of the optical circuit 3 is equal to 60 ps/nm, then the change in pulse duration, after one roundtrip, is also equal to 468 ps, and, after 10 roundtrips, the bandwidth-limited 200 fs pulse is stretched up to 4.68 ns.

*Example no.3:* Using one or more CFBGs so that the absolute value of the overall dispersion parameter of the optical circuit is at least 258 ps/nm, the 400 fs bandwidth-limited pulse can be stretched to 10 ns during 10 roundtrips. However, the duration increment is quite large - 1 ns.

For radiation of a narrower spectrum, a higher value of the overall dispersion parameter of the optical circuit 3 is required in order to achieve a certain rate of pulse duration change than that for radiation of a broader spectrum. If the dispersion parameter value of the available dispersive optical element 17 is too small, a higher overall dispersion parameter *D*_{λ} of the optical circuit 3 can be achieved by using several dispersive elements. The values of the dispersive parameters of the dispersive elements of the same sign add up. Thus, it is possible to reach the value of the dispersion parameter *D*_{λ} of several hundreds of ps/nm. The value of *D*_{λ} is chosen according to the needs of the specific application, which also determines the duration tuning step. A higher number of roundtrips is required for a smoother duration tuning.

*Example no.4:* A pulse repetition rate of the primary laser source 1 is equal to 1 MHz, then *T1* = 1000 ns. In a time interval of 1000 ns, a sequence 6 consisting of 20 pulses which are separated by a time interval T2 = 50 ns can be accommodated. If more roundtrips are needed to achieve the desired pulse duration, it is possible to: 1) reduce the pulse repetition rate of the primary laser source 1 in order to lengthen *T1;* 2) use the device and method of Fig.7. or Fig.8. *Example no.5:* 999 passes are required in the dispersive optical circuit 3. Pulse sequence 6 is composed of 1000 pulses 7-10. Separated by time intervals of *T2* = 50 ns, they occupy a time window of 50 µs. Therefore, the maximum system pulse repetition rate can be 20 kHz.

*Example no.6:* The initial pulse duration is 202 fs. During *N1* = 10 roundtrips, the pulse is being stretched in the optical circuit 3' (see Fig.7), the dispersion parameter of which is equal to -27 ps/nm. After 10 cycles, the pulse becomes 2.025 ns long (see Fig.6). The pulse 10, picked from the formed pulse sequence, is further stretched in the second optical circuit 3", the dispersion parameter of which is equal to -0.142ps/nm. Now, the pulse is lengthened by about 1.06 ps at each roundtrip (see Fig.5). If *N2* = 49, it is possible to have a sequence of 50 pulses with durations in the range of 2.025 ns - 2.077 ns. The user will be able to select any of the fifty pulses. The minimum roundtrip time of both optical circuits 3', 3" will have to be ~10 ns. A time window of 600 ns is required to form the longest pulse. Therefore, the repetition rate of the system can be not higher than 1.67 MHz.

To sum, in addition to applications requiring selectable pulse duration and/or low coherence length in nanosecond radiation, the device of the present invention can be adapted as a very compact, flexible-parameter, purely electronically controlled pulse stretcher in a chirped pulse amplification (CPA) system. A value of the dispersion parameter of real dispersive components is limited and it is problematic to realize a large dispersion parameter. With the device of this invention, we accumulate the required amount of dispersion in the available dispersion element during several passes. For example, a very large laser system with unique specifications is under construction. Using the CPA technique, we amplify the pulses to very high energies. The main limiting factor is the nonlinear phenomena in amplifiers that occur at high peak power. In order for the peak power not to exceed the dangerous limit, the pulses need to be stretched in time. Pulses extended to several hundred picoseconds can be available from the oscillator. Stretching to an even longer duration requires an additional pulse stretcher, and so on. While with the device of the present invention designed as a ring optical circuit, the long pulse duration is achieved with a single dispersive element. The device is highly flexible: the pulse duration and energy can be selected within wide limits and changed if necessary.

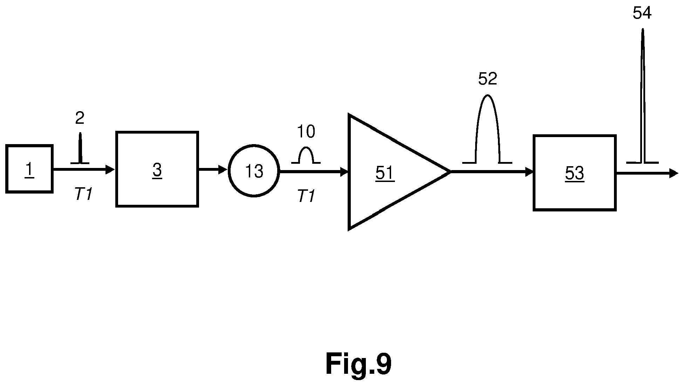

Fig.9 shows a CPA system with the integrated device of the present invention for controlling the duration and energy of laser radiation. The pulse 2 of the broadband ultrashort-pulse oscillator 1 has such a duration that, when amplified by the amplifier 51, nonlinear phenomena would certainly occur, altering the spatial and temporal properties of the radiation and potentially damaging the optical elements. The active dispersive optical circuit 3 of this invention forms the sequence of pulses, from which the pulse 10 of the increased duration is picked by the optical switch 13. In the above-described techniques, it is possible to form a pulse 10 of suitable duration, adjusted to parameters of the amplifier 51 in such a way that the potential of the amplifier is maximally used while nonlinear phenomena do not still occur. After amplifying the phase-modulated pulse 10, a pulse 52 is obtained. After compression of said pulse 52 by a pulse compressor 53, a pulse 54 with an extremely high peak power is obtained. The duration of the compressed pulse 54 can be equal to the ultrashort duration of the oscillator pulse 2.

The flexibility of the device of the present invention is illustrated by the following examples:
*Situation no. 1:* A theoretical modeling of how much gain will narrow the spectrum and shorten the pulse was inaccurate, and in a real system the pulse is shortened too much. By adding one or more roundtrips in the device of the present invention, said excessive pulse shortening can be compensated. Meanwhile, in the standard scheme of several consecutive pulse stretchers, the modification of at least one of the stretchers would be necessary.
*Situation no.2:* When working with extremely high energy systems, specifically OPCPA systems, their adjustment is problematic because of working close to a damage threshold and because the size and conditions (vacuum) do not allow to easily make changes of parameters. Pulses from CPA amplifiers are usually used to pump stages of optical parametric amplification.

Alignment and adjustment of the OPCPA system requires a pump pulse that is similar in energy to a pump pulse in an "operation mode", but the duration should be longer in order to not exceed the peak power limit. In the device of the present invention, it is very easy to form significantly longer pulses simply by increasing the number of roundtrips. In the adjustment mode of the OPCPA system, the pulse stretcher of the CPA system used for accumulation, embodied according to the present invention, would stretch the pulse more than the pulse compressor is able to compensate. After adjusting the system and switching to the operation mode, the user would reduce the number of roundtrips of the pulse inside the ring optical circuit of the pulse stretcher, thus the pulse compressor would compensate pulse dispersion and compress the pulse to duration suitable for the operation mode. The transition from adjustment mode to operation mode would be done only electronically, and the optical elements of the system would not be changed, moved, or turned. For example, the compressed pulse 54 would be used to pump the parametric crystal of the OPCPA system. In the framework of this invention, it is not difficult to form pulses 54 of two different durations - the duration intended for the operation of the OPCPA system and the duration intended for adjustment of the OPCPA system. In order to form said pulses 54 of two different durations after the pulse compressor 53, the pulse stretcher, which is realized according to the method and device of this invention, forms the stretched pulses 10 of two different durations: 1) the duration *T'* for the operation and 2) the duration *T"* for the adjustment, where *T"* > *T'.* During the formation of a pulse of the duration intended for systems adjustment, the pulse part 11b makes *N1* roundtrips in the optical circuit 3, and its duration becomes equal to *T'= T*₀ + *N1**Δ*λ***D*_{λ}, where *T*₀ is the bandwidth-limited pulse duration. During the formation of the pulse of the duration intended for normal operation of the system, the pulse part 11b makes *N2* roundtrips in the optical circuit 3, and its duration becomes equal to *T*" = *T*₀ + *N2**Δ*λ***D*_{λ}, *N2* > *N1.* Since the pulse compressor 53 is designed to compensate the dispersion of the pulse 10 of the first duration *T*', the pulse of the second duration *T*" will not be compressed. *T*" can be two or more times longer than *T*' to enable system adjustment under safe conditions. According to one of the realizations, in the operation mode of the OPCPA system, the duration *T*' of the pulse 54 used to pump the parametric crystal is equal to the duration *T*'of the initial pulse 2 of the primary laser source 1, and in the adjustment mode of the OPCPA system, the duration *T*" of the pulse 54 is at least twice longer than the duration of said pulse 2.

*Situation no.3:* yet another embodiment of the present invention is possible for obtaining twice longer pump pulses (from CPA system) for adjustment of the OPCPA system, and, later, for switching to a regime for forming pump pulses for operation of the OPCPA. In the device of the present invention, by integrating two branches containing dispersive elements of opposite dispersion signs into a ring optical circuit through a commutator, pulses with the opposite chirp sign are obtained. Dispersive elements whose absolutes values of the dispersion parameter coincide and only the signs differ would result in equal pulse elongation. Suppose the CPA system's pulse compressor is designed to compress positively chirped pulses. This compressor will not compress and even further stretch negatively chirped pulse. The same CPA system, without changing or moving anything in the entire circuit, can have two modes: adjustment mode (when the commutator directs the pulse to the first branch with a negative dispersion element) and operation mode (when the commutator directs the pulse to the second branch with a positive dispersion element). The high-energy chirped pulse amplifier that can quickly and safely change the pulse duration without moving a single optical element of the pulse compressor would have many advantages over standard systems. Further, a possibility of the adjustment of pulse duration described in the Example no.6, can be extremely relevant for CPA and OPCPA laser systems. In order to exploit the full potential of the CPA amplifier and to avoid nonlinear phenomena, it is necessary to select the pulse duration accurately, which allows to reach the maximum energy without exceeding the peak power limit. And the pulse duration of the CPA amplifier is important in the subsequent stage, the OPCPA system.

Another application of the solution of this invention: the device of this invention can itself work as a regenerative amplifier without risk to damage the fiber components. Amplification of a fixed-duration pulse in fiber optics very quickly reaches the limit of peak power and energy, at which nonlinear phenomena and damage appear. If the pulse is stretched in time, the safe energy value, with which the limit peak power is not yet exceeded, increases. The device of this invention is used both for pulse duration control and amplification. The more roundtrips in the ring optical circuit, the more the pulse can be amplified. The acousto-optic modulator inside the ring optical circuit can be used to control the gain and to maintain a safe level, as its speed is sufficient.

Other applications of the device of the present invention include but are not limited to, material processing with pulses of variable duration, material processing with hundred MHz sequences of pulses of incremental durations. It is also possible to make a comprehensive research (efficiency of continuum generation, efficiency of material ablation, or spectroscopic studies), which require a laser source with a wide selection range of pulse durations from hundreds of femtoseconds to tens of nanoseconds, and capable of working at a pulse repetition rate of up to 1 MHz. All applications requiring pulse durations from hundreds of picoseconds to tens of nanoseconds and low coherence lengths could utilize the device of the present invention without any additional pulse shaping stages.

## Claims

1. Method for controlling pulse duration and energy of laser radiation comprising injection of a pulse (2) of a broadband primary laser source into an optical circuit (3), where the injected pulse propagates as a working pulse (11) and makes the following steps defining one complete cycle:
(A) directing at least a part (11b) of said working pulse (11) into a ring optical circuit;
(B) undergoing energy losses of said part (11b) of the pulse, which propagates in the ring optical circuit;
(C) interacting said part (11b) of the pulse with a dispersive optical element to form a chirped pulse (11c), with the condition that the pulse energy losses experienced in step (B) are less than 100%;
(D) amplifying said chirped pulse (11c) to form an amplified chirped pulse (11d);
and further said steps of the cycle are repeated *N* times, where N is any integer, and in each subsequent cycle said amplified chirped pulse (11d) propagates through the optical circuit (3) as a new working pulse (11),
**characterized in that**
- the working pulse (11) is split into two parts at the beginning of each cycle, wherein
- the part (11b) of the working pulse (11), which in step (A) is directed into the ring optical circuit, and another part (11a) of the working (11), which is not directed to the ring optical circuit, have a fixed energy ratio, and
- said another part (11a) of the working pulse (11) is ejected from the optical circuit (3) to form an output pulse,
- a sequence (6) of output pulses is formed at an output port (5) of said optical circuit (3), said sequence (6) consisting of said output pulses ejected from the optical circuit (3),
- the sequence (6) consists of *N*+1 output pulses (7-10), duration of each subsequent pulse being different from the previous pulse of the sequence (6) by an amount of *ΔT = Δλ***D*_{λ}*,* where *D*_{λ} is an overall dispersion parameter of said optical circuit (3), and *Δλ* is a spectral width of radiation; durations of the first pulse (7) and the last pulse (10) differ by an amount of *ΔT*_{N} = *N***Δλ***D*_{λ}*.*

2. Method according to claim 1, wherein said fixed energy ratio of the parts (11b) and (11a) of the working pulse (11) is selected from the range of values from 1%:99% to 99%:1%.

3. Device for controlling pulse duration and energy of laser radiation, having an optical circuit (3) featuring beam diffraction compensation, dispersion, and amplification properties and comprising:
- an element for injecting a pulse (2) of a broadband primary laser source into an optical circuit (3), where the injected pulse propagates as a working pulse (11);
- an element (14) for directing at least a part (11b) of said working pulse (11) to a ring optical circuit;
- a loss control element (15) designed to control energy losses of said part (11b) of the pulse, which propagates in the ring optical circuit;
- a dispersive optical element (17) designed to change a phase of spectral components of said part (11b) of the pulse, which propagates in the ring optical circuit, to form a chirped pulse (11c);
- an optical amplifier (18) for amplifying said chirped pulse (11c) to form an amplified chirped pulse (11d);
wherein said direction of the part (11b) of the pulse to the ring optical circuit and its propagation inside the ring optical circuit occurs *N* times, where *N* is any integer, and in each subsequent roundtrip of the ring optical circuit, said amplified chirped pulse (11d) propagates as a new working pulse (11),
**characterized in that**
- said element (14) is a beam splitter, having two inputs and two outputs and splitting a pulse received through any of the inputs into two parts (11a, 11b) in a fixed ratio;
- said element (14) is configured and integrated in said optical circuit (3) so that the part (11a) of the pulse from the first output of the element (14) is ejected from said optical circuit (3), forming an output pulse after each roundtrip of the ring optical circuit; while the part (11b) of the pulse from the second output of the element (14), after a complete roundtrip of the ring optical circuit and being formed as the amplified chirped pulse (11d), gets into one of the inputs of the element (14) again as a working pulse (11);
- said loss control element (15) is an acousto-optic modulator having one input and one or two outputs, the input and one of the outputs of which are connected to said ring optical circuit; wherein
from said output pulses formed after each roundtrip of the ring optical circuit, a sequence (6) of output pulses consisting of *N*+1 output pulses (7-10) is formed; duration of each subsequent pulse being different from the previous pulse of the sequence by an amount of *ΔT* = *Δλ***D*_{λ}*,* where *D*_{λ} is an overall dispersion parameter of said optical circuit (3), and *Δλ* is a spectral width of radiation; durations of the first pulse (7) and the last pulse (10) differ by an amount of *ΔT*_{N} = *N***Δλ***D*_{λ}*.*

4. Device according to claim 3, **characterized in that**
durations of the pulses (7-10) at a half-intensity level is in the range from 100 fs to 10 ns.

5. Device according to any one of claims 3-4, **characterized in that**
the duration of each subsequent pulse of the output pulse sequence (6) is larger than the duration of the preceding pulse.

6. Device according to any of claims 3-5, **characterized in that**
a coherence length of said pulses (7-10) of the sequence (6) does not exceed 300 µm.

7. Device according to any one of claims 3-6, **characterized in that**
a repetition rate of the output pulse sequence (6) is in the range from 1 kHz to 1 MHz.

8. Device according to any of claims 3-7, **characterized in that**
energy of the amplified chirped pulse (11d) at the end of each roundtrip of the ring optical circuit is higher than the energy of said working pulse (11) at the beginning of that roundtrip of the ring optical circuit.

9. Device according to any one of claims 3-8, **characterized in that**
a roundtrip time T2 of said ring optical circuit is selected to be at least five times longer than the duration of the longest pulse of the output pulse sequence (6) at the half-intensity level and to exceed 6 ns; any single pulse is picked from the output pulse sequence (6) by an optical switch (13).

10. Device according to any one of claims 3-9, **characterized in that**
all components of said optical circuit (3) are fiber-optic or with integrated fiber input and output connections forming a continuous fiber optical circuit:
- the loss control element (15) is an acousto-optic modulator for fiber circuits,
- the optical amplifier (18) is a segment of a fiber doped with active ions,
- the beam splitter (14) is a 2x2 fiber beam splitter, the second output of which is connected to the second input by said fiber components of the device to form a ring optical circuit,
- the dispersive optical element (17) is at least one chirped fiber Bragg grating, which is connected to the optical circuit through a circulator (16), and changes the phase of the spectral components of the reflected radiation, and its parameters ensure a high reflection coefficient for the wavelengths of the radiation circulating in the ring optical circuit.

11. Device according to any one of claims 3-9, **characterized in that**
all components of said optical circuit (3) are fiber-optic or with integrated fiber inputs and outputs forming a continuous fiber optical circuit:
- the loss control element (15) is an acousto-optic modulator for fiber circuits,
- the optical amplifier (18) is a segment of fiber doped with active ions,
- the beam splitter (14) a 2x2 fiber beam splitter,
- the optical circuit is linear and is formed by a trajectory of a circulating pulse from one reflective Bragg grating (17a) connected to the second output of the element (14) to another reflective Bragg grating (17b) connected to the second input of the element (14); at least one of said reflective Bragg gratings (17a, 17b) is a chirped fiber Bragg grating which operates as a dispersive optical element (17) which changes the phase of the spectral components of the reflected radiation;
- parameters of both Bragg gratings (17a, 17b) ensure a high reflection coefficient for the wavelengths of radiation circulating in the optical circuit.

12. Device according to any of claims 3-11, **characterized in that**
an absolute value of the dispersion parameter *D*_{λ} of said optical circuit (3) is in the range between 0.03 ps/nm and 300 ps/nm.

13. Laser system for amplifying chirped pulses comprising a primary laser source (1), a pulse stretcher, an amplifier, and a pulse compressor (53) and generating a compressed output pulse (54) with a duration equal to the ultrashort duration of the pulse (2) of the primary laser source (1) or has an intermediate value between the duration of said pulse (2) and a duration of a pulse (52) after the pulse compressor, **characterized in that,**
to accomplish the function of the pulse stretcher and the amplifier, or the pulse stretcher only, the device for controlling pulse duration and energy of laser radiation according to any of claims 3-12 is used.

14. Laser system according to claim 13, **characterized in that** the amplifier is a quantum amplifier (51) selected from a list of solid-state or fiber amplifiers with an amplification factor of at least 1000; one chirped pulse (10) is directed to the quantum amplifier (51); said chirped pulse (10) is picked by the optical switch (13) from the pulse sequence (6) at the output of the optical circuit (3) of said device according to any of claims 3-12.

15. Laser system according to any of claims 13-14, **characterized in that** said output pulse (54) of the pulse compressor (53) is used to pump another system, and its duration depends on the mode of operation of said laser system: in one mode of operation, it is equal to the duration of the pulse (2) of the primary laser source (1), and in another mode of operation it is at least twice larger than the duration of said pulse (2).
